# EUROPEAN PATENT SPECIFICATION

(11) **EP 4 007 319 B1**
(45) Date of publication and mention of the grant of the patent: **09.08.2023**
(21) Application number: 22164744.9
(22) Date of filing: 28.03.2022
(51) Int. Cl.: H04W 4/40, H04W 4/44, H04W 4/46, H04W 12/08

(54) **VEHICLE COMMUNICATION METHOD, APPARATUS, STORAGE MEDIUM AND PROGRAM PRODUCT**
FAHRZEUGKOMMUNIKATIONSVERFAHREN, GERÄTE, SPEICHERMEDIUM UND PROGRAMMPRODUKT
PROCÉDÉ ET APPAREIL DE COMMUNICATION POUR VÉHICULE, DISPOSITIF DE STOCKAGE ET PRODUIT PROGRAMME D'ORDINATEUR

(30) Priority: 14.05.2021 CN 202110528816
(43) Date of publication of application: 01.06.2022
(73) Proprietor: Apollo Intelligent Connectivity (Beijing) Technology Co., Ltd., Beijing 100176 (CN)
(72) Inventor: SHI, Zhenzhen, Beijing, 100176 (CN); ZHU, Shuanghe, Beijing, 100176 (CN); CAO, Liang, Beijing, 100176 (CN)
(74) Representative: Studio Torta S.p.A.

(56) References cited:
- WO-A1-2020/118146

## Description

### TECHNICAL FIELD

Embodiments of the present disclosure relate to artificial intelligence technology, and in particular, to a vehicle communication method, apparatus, storage medium and program product, which can be applied in the field of intelligent drive and vehicle to X.

### BACKGROUND

As the technology of vehicle to X (V2X) develops, traffic participants such as vehicles, road infrastructures and pedestrians are mutually connected, having formed a new application scenario with mutual connection and communication.

Currently, a batch of intelligent traffic areas have already been established in many regions, and mutual trust and communication between local V2X devices can be achieved in the intelligent traffic area. At the same time, many entities such as alliance ecology, organization and vehicle company original equipment manufacturer (OEM) are also involved in the field of intelligent traffic. However, such entities are all developing independently. How a V2X device of such entities, upon entering the intelligent traffic area, trusts and communicates with a local V2X device in the intelligent traffic area is an urgent problem to be solved.

WO 2020/118146 A1 discloses a system, methodologies and components for managing trust across multiple Root Certificate Authorities using both electors and regional Certificate Trust Lists (CTLs). Accordingly, systems and methodologies are provided for managing trust across multiple Root CAs and performing such management in a more efficient way than conventionally known or available. More specifically, systems and methodologies are provided that implement a V2I and/or V2X PKI technology implementation.

### SUMMARY

The invention is defined by the subject matter of the independent claims. Advantageous enhancements are subject to the dependent claims.

### BRIEF DESCRIPTION OF DRAWINGS

The drawings are used for a better understanding of this solution and do not constitute a limitation of the present disclosure, where:
FIG. 1 is a schematic diagram of an intelligent traffic scenario;
FIG. 2 is a flowchart diagram of a vehicle communication method provided by an embodiment of the present disclosure;
FIG. 3 is a flowchart diagram of a vehicle communication method provided by an embodiment of the present disclosure;
FIG. 4 is a flowchart diagram of a vehicle communication method provided by an embodiment of the present disclosure;
FIG. 5 is a flowchart diagram of a vehicle communication method provided by an embodiment of the present disclosure;
FIG. 6 is a schematic diagram of a trusted certificate list provided by an embodiment of the present disclosure;
FIG. 7 is a structural schematic diagram of a vehicle communication apparatus provided by an embodiment of the present disclosure;
FIG. 8 is a structural schematic diagram of a vehicle communication apparatus provided by an embodiment of the present disclosure;
FIG. 9 is a structural schematic diagram of a vehicle communication apparatus provided by an embodiment of the present disclosure; and
FIG. 10 is a schematic block diagram of an electronic device used to realize the vehicle communication method of the embodiments of the present disclosure.

### DESCRIPTION OF EMBODIMENTS

The following description of illustrative embodiments of the present disclosure will be made with reference to the accompanying drawings, which include various details of the embodiments of the present disclosure to facilitate understanding, and they should be regarded as illustrative only. Therefore, those of ordinary skill in the art should realize that various changes and modifications can be made to the embodiments described herein without departing from the scope of the present disclosure. Similarly, for clarity and conciseness, descriptions of well-known functions and structures are omitted in the following description.

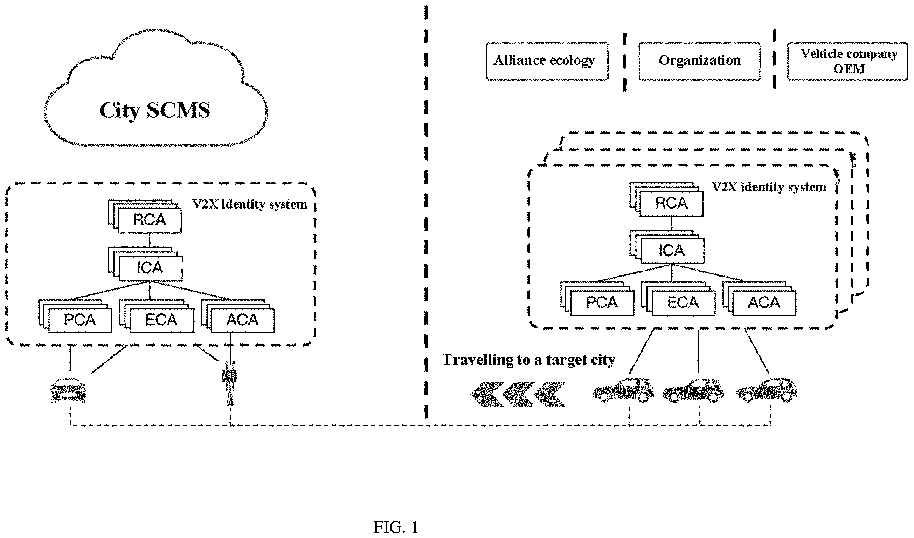

FIG. 1 is a schematic diagram of an intelligent traffic scenario. As shown in FIG. 1, a city is an intelligent traffic demonstration area, and V2X devices in this city are managed by the city's security certificate management system service (SCMS). By constructing the city's certificate system (or referred to as trust system and identity system), mutual trust among V2X devices can be realized, so that V2X devices in this city can communicate with each other by using the certificate of this certificate system. At the same time, some entities such as alliance ecology, organization, vehicle company OEM, etc., also ensure mutual trust and communication between their respective V2X devices through their respective certification systems. Illustratively, V2X devices can be roadside devices, vehicles, vehicle-mounted electronic devices, etc.

As shown in FIG. 1, one certificate system may include a root certificate authority (RCA), and an intermediate certificate authority (ICA) of lower level, a pseudonym certificate authority (PCA), an enrollment certificate authority (ECA) and an application certificate authority (ACA).

The RCA is a CA with highest level in one public key infrastructure (PKI) system in a V2X security system. The RCA first needs to issue a self-signed certificate to itself, where the self-signed certificate is also referred to as a root certificate, and the root certificate is an end point of all certificate chains in a PKI system, that is, the trust anchor of the PKI system. The RCA can issue a sub-CA certificate, such as an ECA certificate, a PCA certificate and an ACA certificate, etc., to a subordinate CA according to requirement. The ECA is responsible for issuing a registration certificate to a V2X device such as an on-board unit (OBU), a road side unit (RSU) and a V2X service provider (VSP), etc. The PCA is responsible for issuing a pseudonym certificate to the OBU. The ACA is also referred to as an application authorization CA (AACA), which is in responsible for issuing an identify certificate to the OBU, and issuing an application certificate to the V2X device such as the RSU and the VSP. The ICA is located between the RCA and the CA that issues registration certificates and various authorization certificates, and the ICA is used to expand the hierarchy of the PKI system and realize multi-level deployment and multi-level management of the CA.

For the aforementioned various entities, the alliance ecology has its own certificate system, that is, its own RCA; the organization usually belongs to a certain certification system and usually has its own ICA; and the vehicle company OEM also belongs to a certain certification system, and usually has its own ECA and PCA. However, the certificate systems of these entities are all developed independently, and they are also independent of the certificate system of the aforementioned intelligent traffic demonstration area. For example, the certificate system of the intelligent traffic demonstration area is called a local certificate system, and the certificate systems of other various entities are called external certificate systems. After entering the intelligent traffic demonstration area, the vehicle of these entities cannot realize mutual trust and communication with V2X device in the intelligent traffic demonstration area. Illustratively, a vehicle company OEM belongs to a certificate system different from that of the intelligent traffic demonstration area. The vehicles of this vehicle company OEM can communicate with each other through the certificate of this vehicle company OEM. However, after driving to the intelligent traffic demonstration area, the vehicles of this vehicle company OEM cannot realize mutual trust and communication with other V2X devices in the intelligent traffic demonstration area.

To solve the above problem, in the vehicle communication method provided by the embodiment of the present disclosure, a vehicle outside the intelligent traffic area can not only acquire verification information for communication corresponding to the vehicle itself, but also acquire verification information for mutual communication between V2X devices within the intelligent traffic area, where the verification information may specifically include root verification information and sub-verification information, the root verification information is used to verify the sub-verification information, to ensure correctness and security of the verification information, so that the vehicle outside the intelligent traffic area can realize mutual trust and communication to V2X devices within the intelligent traffic area by using verification information corresponding to the vehicle and verification information corresponding to the intelligent traffic area.

In the following, the vehicle communication method provided by the present disclosure will be described in detail with reference to specific embodiments. The vehicle communication method relates to the field of artificial intelligence, and in particular, to the field of intelligent drive and vehicle to X. It shall be understood that, the following specific embodiments may be combined with each other, and same or similar concepts or processes may not be repeated in some embodiments.

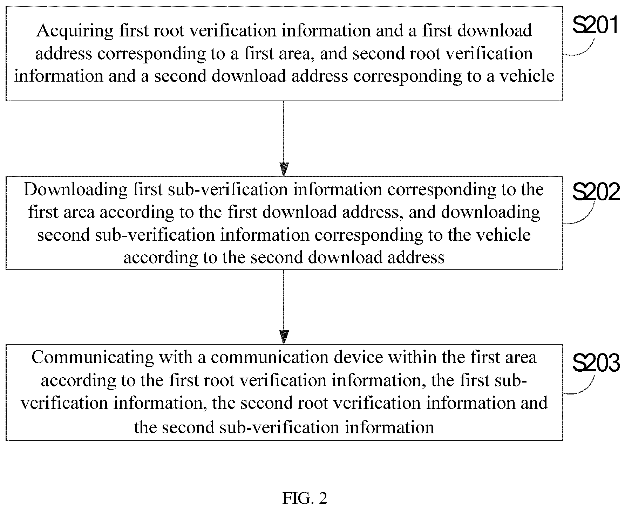

FIG. 2 is a flowchart diagram of a vehicle communication method provided by an embodiment of the present disclosure. Execution subject of the method may be a vehicle, a vehicle-mounted device, etc. As shown in FIG. 2, the method includes:
S201, acquiring first root verification information and a first download address corresponding to a first area, and second root verification information and a second download address corresponding to a vehicle.

The first area in the embodiment of the present disclosure is used to represent an intelligent traffic area, and V2X devices within the intelligent traffic area can verify identity of each other by using verification information corresponding to the intelligent traffic area to realize mutual communication. In the present embodiment, verification information corresponding to the first area includes first sub-verification information and the first root verification information corresponding to the first area.

Correspondingly, as mentioned above, a vehicle usually belongs to an entity such as an alliance ecology, an organization or a vehicle company OEM, and verification information corresponding to the vehicle is verification information corresponding to the entity, V2X devices of the entity can verify identity of each other by using the verification information corresponding to the entity to realize mutual communication, and verification information corresponding to the vehicle also include second root verification information and second sub-verification information.

For the first area or the vehicle, the sub-verification information may be multiple, thus sub-verification information can adopt an indirect storage manner and be stored in a position corresponding to a download address. For example, the first sub-verification information corresponds to the first download address, and the second sub-verification information corresponds to the second download address.

S202, downloading the first sub-verification information corresponding to the first area according to the first download address, and downloading the second sub-verification information corresponding to the vehicle according to the second download address.

After acquiring the first download address and the second download address, the vehicle may download the first sub-verification information and the second sub-verification information respectively, and the vehicle may verify correctness of the first sub-verification information by using the first root verification information, and verify correctness of the second sub-verification information by using the second root verification information.

S203, communicating with a communication device within the first area according to the first root verification information, the first sub-verification information, the second root verification information and the second sub-verification information.

Upon acquiring the first sub-verification information and the first root verification information corresponding to the first area and its own second root verification information and the second sub-verification information, the vehicle may communicate with the communication device within the first area by using such verification information. The communication device may be a V2X device, such as a vehicle, a road side device, etc.

In the vehicle communication method provided by the embodiment of the present disclosure, a vehicle outside the first area can acquire the verification information corresponding to the vehicle itself and the verification information corresponding to the first area, thereby realizing mutual trust and communication with the communication device within the intelligent traffic area by using the verification information corresponding to the vehicle and the verification information corresponding to the intelligent traffic area.

Further description will be made on the basis of the above mentioned embodiment. In the embodiment of the present disclosure, the first root verification information and the first download address corresponding to the first area, and the second root verification information and the second download address corresponding to the vehicle can be managed through a mutual trust platform. The mutual trust platform may be a server, a cloud server, a cloud platform, etc., and it will be illustrated by taking the server as an example, a mutual trust platform corresponding to the first area is a server corresponding to the first area, that is, the vehicle can acquire access verification information from the server corresponding to the first area, where the access verification information includes the first root verification information and the first download address corresponding to the first area, and the second root verification information and the second download address corresponding to the vehicle.

To describe with reference to practical application, the first root verification information corresponding to the first area is a root certificate of a local certificate system of the first area, and the first sub-verification information is a trusted domain certificate list of the local certificate system of the first area. The second root verification information corresponding to the vehicle is a root certificate of an external certificate system to which the vehicle belongs, and the second sub-verification information corresponding to the vehicle is a trusted domain certificate list of the external certificate system to which the vehicle belongs.

The mutual trust platform is used to manage related information of certificates of the local certificate system of the intelligent traffic area and the external certificate system. Illustratively, taking the first area as an example, the mutual trust platform of the first area can maintain one trusted root certificate list (TRCL), and the trusted root certificate list is the above mentioned access verification information, and the trusted root certificate list includes the root certificate and a download address of the trusted domain certificate list of the local certificate system of the first area, and further includes a root certificate and a download address of a trusted domain certificate list of at least one external certificate system, where the at least one external certificate system includes the external certificate system to which the vehicle belongs. The external certificate system may be a certificate system of the above mentioned V2X alliance ecology, a certificate system of the V2X organization or a certificate system of the vehicle company OEM, where such alliance ecology, organization and vehicle company OEM all have subordinate V2X devices. The domain certificate is another certificate other than the root certificate, for example, an ICA certificate, an ECA certificate, a PCA certificate, an ACA certificate, etc.

When the vehicle belongs to the external certificate system needs to communicate with the local V2X device of the intelligent traffic area, for example, when a vehicle of an external certificate system drives to an intelligent traffic area, the vehicle can acquire the trusted root certificate list from the mutual trust platform of the intelligent traffic area, and then acquire respective root certificates and download addresses of trusted domain certificate lists of all certificate systems maintained by the mutual trust platform, and such certificate systems include the root certificate and the download address of the trusted domain certificate list of the external certificate system to which the vehicle itself belongs.

It can be understood that, the vehicle belonging to the external certificate system can acquire the root certificate and the download address of the trusted domain certificate list of the local certificate system of the area corresponding to the mutual trust platform, and can also acquire root certificates and download addresses of trusted domain certificate lists of the external certificate system to which the vehicle itself belongs and other external certificate systems. Apparently, the local V2X device of the intelligent traffic area can also acquire the root certificate and the download address of the trusted domain certificate list of the at least one external certificate system from the mutual trust platform.

The vehicle can download trusted domain certificate lists of respective certificate systems according to download addresses of trusted domain certificate lists of respective certificate systems included in the trusted root certificate list, that is, to obtain trusted domain certificate lists of all certificate systems maintained in the mutual trust platform of the intelligent traffic area.

After acquiring root certificates and trusted domain certificate lists of all certificate systems maintained by the mutual trust platform, the vehicle can communicate with the V2X device in the intelligent traffic area corresponding to the mutual trust platform. It can be understood that, the vehicle not only can communicate with the local V2X device, but also can communicate with V2X devices subordinated in other external certificate systems maintained by the mutual trust platform.

In the vehicle communication method of the embodiment of the present disclosure, the vehicle can acquire the trusted root certificate list from the mutual trust platform of one intelligent traffic area, so as to acquire related information of the certificate of the local certificate system and the external certificate system of the intelligent traffic area maintained therein, thereby realizing mutual trust and communication to the local V2X device of the intelligent traffic area and the V2X device subordinated in the external certificate system in the intelligent traffic area.

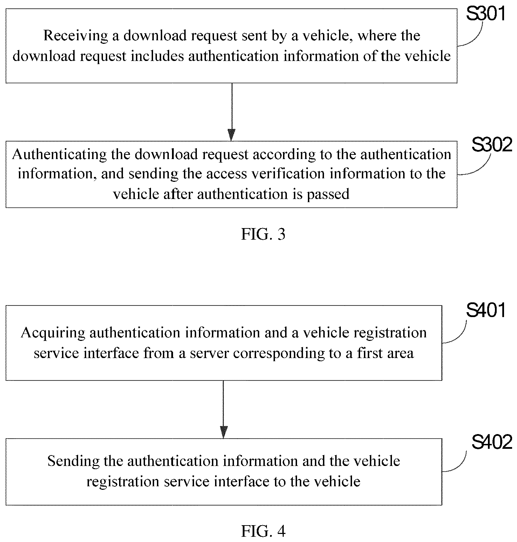

FIG. 3 is a flowchart diagram of a vehicle communication method provided by an embodiment of the present disclosure. The method is applied to a server corresponding to a first area. As shown in FIG. 3, the method includes:
S301, receiving a download request sent by a vehicle, where the download request includes authentication information of the vehicle.

The download request is used to request to download access verification information, where the access verification information includes a first download address of first sub-verification information and first root verification information corresponding to the first area, and a second download address of second sub-verification information and second root verification information corresponding to the vehicle.

The access verification information in the embodiment of the present disclosure is the same as that in the above mentioned embodiments, which will not be repeated herein. The server corresponding to the first area receives the download request sent by the vehicle, where the authentication information included in the download request may be provided in advance by the server corresponding to the first area, such that the server corresponding to the first area can authenticate the download request according to the authentication information.

S302, authenticating the download request according to the authentication information, and sending the access verification information to the vehicle after authentication is passed.

The server corresponding to the first area can authenticate the download request of the vehicle according to an identifier of the vehicle and the authentication information, for example, determine whether the authentication information of the vehicle is expired and so on, and after the authentication is passed, the server corresponding to the first area can send the access verification information to the vehicle, so that the vehicle can acquire the first sub-verification information and the first root verification information corresponding to the first area, and the second sub-verification information and the second root verification information corresponding to the vehicle according to the access verification information, thereby realizing mutual trust and communication to a communication device in the first area.

In the vehicle communication method in the embodiment of the present disclosure, the access verification information is maintained in the server corresponding to the first area, and the vehicle can request to the server corresponding to the first area to download the access verification information, thereby realizing mutual trust and communication to the communication device of the first area after the access verification information is acquired.

To describe with reference to practical application, a mutual trust platform corresponding to the first area receives the download request sent by the vehicle, and the download request includes a security credential of the vehicle. The download request is used to request to download a trusted root certificate list of the mutual trust platform. The trusted root certificate list includes respective root certificates and download addresses of trusted domain certificate lists of a local certificate system of the mutual trust platform and at least one external certificate system, where the at least one external certificate system includes the external certificate system to which the vehicle belongs.

The trusted root certificate list of the mutual trust platform in the embodiment of the present disclosure is the same as that in the above mentioned embodiments, which will not be repeated herein. The mutual trust platform receives the download request sent by the vehicle, where the security credential included in the download request is the authentication information, and the security credential may be provided in advance by the mutual trust platform, for example, the security credential may be a certificate or a token, etc.

The mutual trust platform corresponding to the first area authenticates the download request of the vehicle according to the security credential, for example, determine whether the security credential of the vehicle is expired, and after authentication is passed, the mutual trust platform can send the trusted root certificate list to the vehicle, such that the vehicle can acquire trusted domain certificate lists of respective certificate systems according to the download address of the trusted domain certificate list of the local certificate system and the external certificate system in the trusted root certificate list, thereby realizing mutual trust and communication to the local V2X device in the first area and the V2X device in other external certificate systems.

In the vehicle communication method in the embodiment of the present disclosure, a trusted root certificate list is provided by the mutual trust platform, and the vehicle requests to the mutual trust platform to download the trusted root certificate list, the mutual trust platform can authenticate through the security credential in the download request and send the trusted root certificate list to the vehicle after authentication is passed, such that the vehicle can acquire related information of the certificate of the local certificate system and the external certificate system of the intelligent traffic area maintained therein, thereby realizing mutual trust and communication to the local V2X device of the intelligent traffic area and the V2X device subordinated in the external certificate system in the intelligent traffic area.

FIG. 4 is a flowchart diagram of a vehicle communication method provided by the embodiment of the present disclosure. The method is applied to a server corresponding to a vehicle. As shown in FIG. 4, the method includes:
S401, acquiring authentication information and a vehicle registration service interface from a server corresponding to a first area.

In a scenario where the vehicle needs to communicate with a V2X device in an intelligent traffic area, the vehicle can first acquire the authentication information and the vehicle registration service interface from the server corresponding to the first area through the server corresponding to the vehicle. The server corresponding to the vehicle may be a server of an entity to which the vehicle belongs to. The vehicle registration service interface is used to send a vehicle registration request to the server corresponding to the first area by using the authentication information to obtain a download address of access verification information, the authentication information is used to authenticate the vehicle registration request. The access verification information includes a first download address of first sub-verification information and first root verification information corresponding to the first area, and a second download address of second sub-verification information and second root verification information corresponding to the vehicle. The access verification information is the same as that in the above mentioned embodiments, which will not be repeated herein.

S402, sending the authentication information and the vehicle registration service interface to the vehicle.

The server corresponding to the vehicle acquires the authentication information and the vehicle registration service interface and send them to the vehicle, such that the vehicle can send the vehicle registration request to the server corresponding to the first area by using the authentication information to obtain the download address of the access verification information, and then send a download request to the server corresponding to the first area according to the download address of the access verification information to obtain the first sub-verification information and the first root verification information corresponding to the first area, and the second sub-verification information and the second root verification information corresponding to the vehicle. Then the vehicle can further realize mutual trust and communication to a communication device within the first area according to the first sub-verification information and the first root verification information corresponding to the first area, and the second sub-verification information and the second root verification information corresponding to the vehicle.

In the vehicle communication method in the embodiment of the present disclosure, the server corresponding to the vehicle acquires the authentication information and the vehicle registration service interface through the server corresponding to the first area, and sends them to a subordinated vehicle, so that the vehicle can request to the server corresponding to the first area to register the vehicle to obtain the access verification information, so as to obtain the first sub-verification information and the first root verification information corresponding to the first area, and the second sub-verification information and the second root verification information corresponding to the vehicle, thereby realizing mutual trust and communication to the communication device within the first area.

Description will be made with reference to practical application. The server corresponding to the vehicle may be the server of the entity to which the vehicle belongs to, that is, the server of the external certificate system to which the vehicle belongs. The server of the external certificate system to which the vehicle belongs acquires a security credential and the vehicle registration service interface from a mutual trust platform of the first area, where the security credential is the above mentioned authentication information.

The server of the external certificate system to which the vehicle belongs send the security credential and the vehicle registration service interface to respective vehicles subordinated to the external certificate system, such that the vehicle can send the vehicle registration request to the mutual trust platform of the first area by using the security credential, to obtain a download address of a trusted root certificate list of the mutual trust platform, similar to the above mentioned embodiment, the trusted root certificate list includes download addresses of respective root certificates and trusted domain certificate lists of a local certificate system of the area to which the mutual trust platform belongs to and at least one external certificate system. Thus the vehicle can further obtain trusted domain certificate lists of respective certificate systems according to download addresses of trusted domain certificate lists of respective certificate systems, and realize mutual trust and communication to the local V2X device in the intelligent traffic area and V2X devices of other external certificate systems.

In the vehicle communication method of the embodiment of the present disclosure, a server device of the external certificate system to which the vehicle belongs acquires the security credential and the vehicle registration service interface through the mutual trust platform, and sends them to respective subordinated vehicles, such that the vehicle can request registration to the mutual trust platform to acquire trusted root certificate list of the mutual trust platform, and acquire related information of the certificate of the local certificate system and the external certificate system through the trusted root certificate list, thereby realizing mutual trust and communication to the local V2X device of the intelligent traffic area and the V2X device subordinated in the external certificate system in the intelligent traffic area.

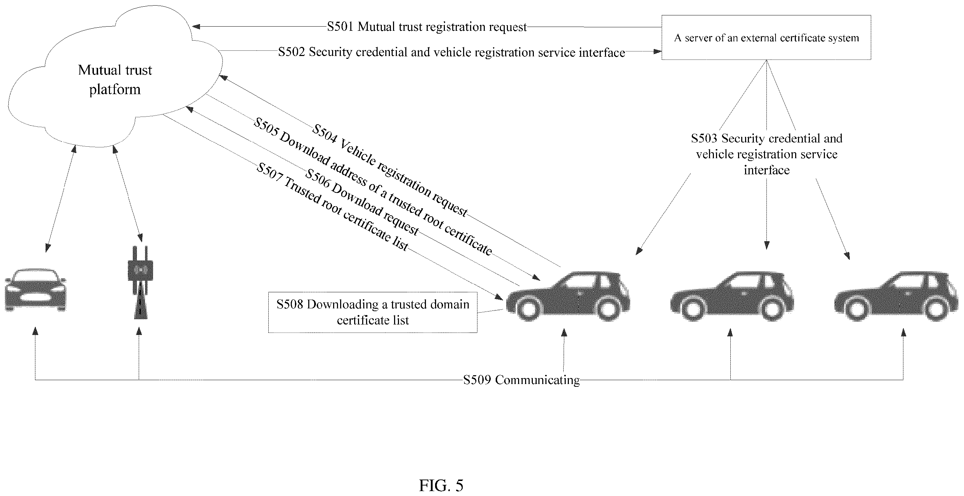

On the basis of the above embodiments, with reference to the interaction process between the server of the external certificate system, the mutual trust platform and the vehicle shown in FIG. 5, the vehicle communication method provided by the embodiments of the present disclosure will be further described. It should be noted that, in the following embodiment, as shown in FIG. 5, the method includes:
S501, the server of the external certificate system sends a mutual trust registration request to the mutual trust platform.

The mutual trust registration request includes registration information of the external certificate system and certificate information of the external certificate system. The server of the external certificate system is the server corresponding to the above vehicle.

The registration information may include information of the external certificate system such as an organization name, a category (such as alliance ecology, organization or vehicle company OEM), an organization credential, etc. The registration information may further include a manner of vehicle registration authentication, for example, quata-License (License), vehicle white list, etc. The quata License restricts a number of V2X devices of the external certificate system that can access to the mutual trust platform, and the vehicle white list restricts specific vehicle of the external certificate system that can access the mutual trust platform.

The certificate information of the external certificate system is related to the category of the external certificate system, the certificate information of the external certificate system is the verification information corresponding to the server corresponding to the vehicle, optionally, the verification information corresponding to the server corresponding to the vehicle includes the download address of the second sub-verification information and the second root verification information corresponding to the vehicle, for example, for the alliance ecology, the certificate information needs to be included in its registration request is the root certificate and the download address of the trusted domain certificate list of the certificate system of the alliance ecology, or, the verification information corresponding to the server corresponding to the vehicle includes the sub-verification information corresponding to the server corresponding to the vehicle, for example, for an organization or a vehicle company OEM, the certificate information needs to be included in the registration request thereof is a domain certificate of the certificate system of the organization or the vehicle company OEM.

In addition, it should be further noted that, in addition to sending the registration request of the external certificate system to the mutual trust platform online, the registration request can also be sent offline, for example, a management person of the external certificate system performs offline application by the means of mail.

S502, the mutual trust platform generates the security credential of the external certificate system, and sends the security credential and the V2X device registration service interface to the server of the external certificate system.

The mutual trust platform first examines the registration request of the external certificate system according to the registration information, the mutual trust platform can examine the registration request of the external certificate system according to the information, such as the organization name, the organization credential etc., in the registration information to determine whether the external certificate system can access to the mutual trust platform, thereby improving security. After the examination is passed, the certificate information of the external certificate system is added to the trusted root certificate list. At the same time, the mutual trust platform can also store and record the information carried in the registration request of the external certificate system for convenience of later inquiry.

Optionally, the certificate information of the external certificate system includes the root certificate and the download address of the trusted domain certificate list of the external certificate system, the mutual trust platform adds the root certificate and the download address of the trusted domain certificate list of the external certificate system to the trusted root certificate list.

Optionally, the certificate information of the external certificate system includes the trusted domain certificate of the external certificate system; the mutual trust platform generates a common root certificate and trusted domain certificate list of the external certificate system and other external certificate systems according to the trusted domain certificate of the external certificate system and trusted domain certificates of other external certificate systems; the common root certificate and trusted domain certificate list of the external certificate system and other external certificate systems are added to the trusted root certificate list.

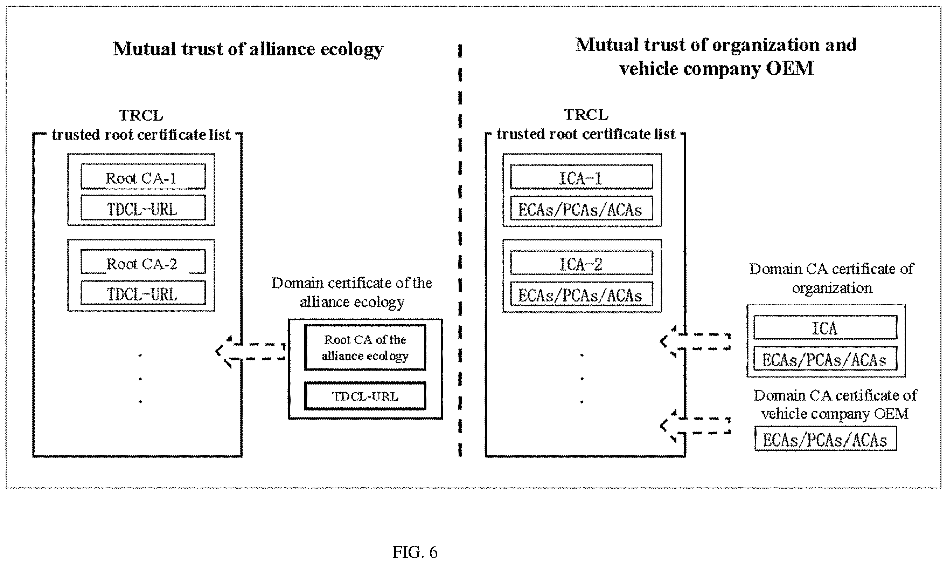

For example, as shown in FIG. 6, when the external certificate system is the alliance ecology, the certificate information thereof includes the root certificate and the download address of the trusted domain certificate list of the alliance ecology. When the external certificate system is the organization or the vehicle company OEM, the certificate information thereof includes the trusted domain certificate of the organization or the vehicle company OEM. The trusted root certificate list authority (TRCLA) of the mutual trust platform adds the root certificate and the download address of the trusted domain certificate list of the alliance ecology to the trusted root certificate list. And the trusted domain certificates of all organizations and vehicle company OEM accessed to the mutual trust platform are generated as a document of the trusted domain certificate list of the organization and the vehicle company OEM, and its root certificate is generated. The document of the trusted domain certificate list of the organization and the vehicle company OEM are signed by TRCLA, and services of updating and downloading are provided. The mutual trust platform adds the download address of the trusted domain certificate list and the root certificate of the organization and the vehicle company OEM to the trusted root certificate list. In addition, the trusted root certificate list further includes the root certificate and the download address of the trusted domain certificate list of the local certificate system of the intelligent traffic area corresponding to the mutual trust platform. It should be noted that, when the external certificate system does not request to register and access to the mutual trust platform, the trusted root certificate list only includes the root certificate and the download address of the trusted domain certificate list of the local certificate system.

After the examination by the mutual trust platform to the mutual trust registration request is passed, the security credential is generated for the external certificate system, and the security credential can be used for authentication of the vehicle. At the same time, the security credential further includes identifying information of the external certificate system, which can be used to distinguish different external certificate systems. The security credential can be in a form of a certificate or a character string, etc., which is not limited by the embodiment of the present disclosure.

S503, the server of the external certificate system sends the security credential and the vehicle registration service interface to the vehicle subordinated to the external certificate system.

S504, the vehicle sends the vehicle registration request to the mutual trust platform according to the vehicle registration service interface.

The vehicle registration request includes the security credential of the vehicle, where the security credential is used by the mutual trust platform to authenticate the vehicle registration request.

After entering the intelligent traffic area, the vehicle sends the vehicle registration request to the mutual trust platform according to the vehicle registration service interface of the intelligent traffic area, to request to access to the mutual trust platform. The registration request further includes, in addition to the security credential, an identifier of the vehicle, where the identifier of the vehicle can be used to exclusively identify the vehicle, for example, the identifier may be information such as a vehicle identification number (VIN) or a vehicle license plate number, etc., and the VIN is consisted of characters or numbers, which is a unique set of numbers used on a vehicle, and can identify information, such as a manufacturer, an engine, a chassis serial number or other performance, etc., of the car.

S505, the mutual trust platform authenticates the vehicle registration request according to the security credential, and sends the download address of the trusted root certificate list to the vehicle after authentication is passed.

The mutual trust platform verifies whether the security credential of the vehicle is valid, whether the License of the external certificate system to which the vehicle belongs is full, or whether the vehicle is in the vehicle white list of the external certificate system to which the vehicle belongs, stores the information of the vehicle after authentication is passed, and returns the TRCLA certificate and the download address of the trusted root certificate list to the vehicle. The mutual trust platform uses the security credential to authenticate the vehicle registration request, thereby ensuring security.

S506, the vehicle sends the download request to the mutual trust platform according to the download address of the trusted root certificate list of the mutual trust platform.

The download request includes the security credential of the vehicle, where the security credential is used by the mutual trust platform to authenticate the download request.

After successfully registering the mutual trust platform, the vehicle can periodically request to the TRCLA of the mutual trust platform to download the trusted root certificate list, to acquire the latest trusted root certificate list. The download request may further include, in addition to the security credential, the identifier of the vehicle.

S507, the mutual trust platform authenticates the download request according to the security credential, and sends the trusted root certificate list to the vehicle after authentication is passed.

The TRCLA of the mutual trust platform will authenticate the download request of the vehicle, for example, inspect whether the vehicle is registered, and authenticate whether the security credential of the vehicle is valid, and return the trusted root certificate list to the vehicle that is successfully authenticated. The mutual trust platform uses the security credential to authenticate the download request, thereby ensuring security.

S508, the vehicle download the trusted domain certificate list according to the download address of the trusted domain certificate list, and import the root certificate and the trusted domain certificate list to a trust certificate list of the vehicle.

The trust certificate list is trust verification information of the vehicle.

S509, the vehicle communicates with the V2X device in the area corresponding to the mutual trust platform according to the trust certificate list.

In the vehicle communication method provided by the embodiments of the present disclosure, a trust island of respective certificate systems is broken through a mutual trust platform, when the respective certificate systems, such as alliance ecology, organization and vehicle company OEM, wish to access the intelligent traffic area, the mutual trust registration application can be raised to the mutual trust platform, and such external certificate systems can be brought into a trust domain for management after the mutual trust platform accepts the mutual trust registration application. Afterwards, the mutual trust platform can grant the security credential to such external certificate systems, such that the vehicle of the external certificate system can use the security credential to register to the mutual trust platform, and acquire related certificates of the respective certificate systems from the mutual trust platform, thereby realizing information safe authentication between the local V2X device and vehicles of different external certificate systems, and realizing mutual trust and communication. At the same time, the mutual trust platform realizes fine-grained management to the V2X device, such that the V2X can access to the network in order, which avoids random spread of information of the V2X device which will cause traffic congestion or disturb traffic order, and avoids hazards like traffic accident, etc.

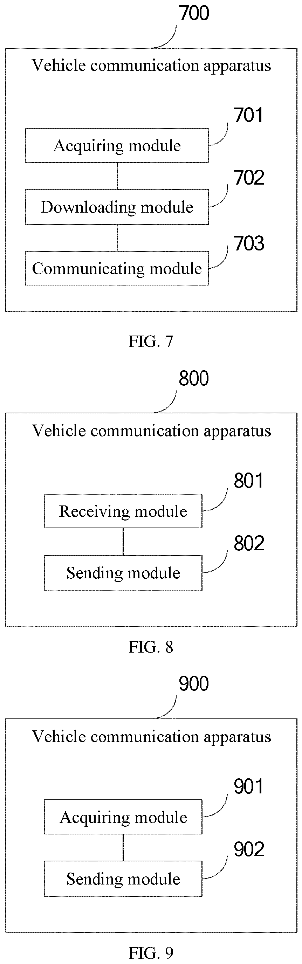

FIG. 7 is a structural schematic diagram of a vehicle communication apparatus provided by an embodiment of the present disclosure. As shown in FIG. 7, the vehicle communication apparatus 700 includes:
an acquiring module 701, configured to acquire first root verification information and a first download address corresponding to a first area, and second root verification information and a second download address corresponding to the vehicle;
a downloading module 702, configured to download first sub-verification information corresponding to the first area according to the first download address, where the first root verification information is used to verify correctness of the first sub-verification information; and download second sub-verification information corresponding to the vehicle according to the second download address, where the second root verification information is used to verify correctness of the second sub-verification information;
a communicating module 703, configured to communicate with a communication device within the first area according to the first root verification information, the first sub-verification information, the second root verification information and the second sub-verification information.

In an embodiment, the acquiring module 701 includes:
an acquiring unit, configured to acquire access verification information from a server corresponding to the first area, where the access verification information includes the first root verification information and the first download address corresponding to the first area, and the second root verification information and the second download address corresponding to the vehicle.

In an embodiment, the acquiring unit includes:
a first sending unit, configured to send a download request to the server corresponding to the first area according to a download address of the access verification information, where the download request includes authentication information of the vehicle, and the authentication information is used to authenticate the download request;
a first receiving unit, configured to receive the access verification information sent by the server corresponding to the first area.

In an embodiment, the communication apparatus 700 of the V2X device further includes:
a sending module, configured to send a vehicle registration request to the server corresponding to the first area, where the vehicle registration request includes the authentication information of the vehicle, and the authentication information is used to authenticate the vehicle registration request;
a receiving module, configured to receive a download address of the access verification information sent by the server corresponding to the first area.

In an embodiment, the sending module includes:
a second receiving unit, configured to receive the authentication information and a vehicle registration service interface sent by a server corresponding to the vehicle, where the authentication information and the vehicle registration service interface are acquired in advance by the server corresponding to the vehicle from the server corresponding to the first area;
a second sending unit, configured to send the vehicle registration request to the server corresponding to the first area according to the vehicle registration service interface.

In an embodiment, the communicating module 703 includes:
an importing unit, configured to import the first root verification information, the first sub-verification information, the second root verification information and the second sub-verification information into trust verification information of the vehicle;
a communicating unit, configured to communicate with the communication device within the first area according to the trust verification information.

The vehicle communication apparatus provided by the embodiment of the present disclosure can be used to execute the vehicle communication method in the above method embodiments, and the realization principle and the technical effect thereof are similar, which will not be repeated herein.

FIG. 8 is a structural schematic diagram of a vehicle communication apparatus provided by an embodiment of the present disclosure. As shown in FIG. 8, the vehicle communication apparatus 800 includes:
a receiving module 801, configured to receive a download request sent by the vehicle, where the download request is used to request to download access verification information, the download request includes authentication information of the vehicle, and the access verification information includes a first download address of first sub-verification information and first root verification information corresponding to a first area, and a second download address of second sub-verification information and second root verification information corresponding to the vehicle;
a sending module 802, configured to authenticate the download request according to the authentication information, and send the access verification information to the vehicle after authentication is passed.

In an embodiment, the receiving module 801 is further configured to receive a vehicle registration request sent by the vehicle, where the vehicle registration request includes the authentication information;
the sending module 802 is further configured to authenticate the vehicle registration request according to the authentication information, and send a download address of the access verification information to the vehicle after authentication is passed.

In an embodiment, the receiving module 801 is further configured to receive a mutual trust registration request sent by a server corresponding to the vehicle, where the mutual trust registration request includes verification information corresponding to the server corresponding to the vehicle;
the apparatus further includes: a processing module, configured to add the verification information corresponding to the server corresponding to the vehicle into the access verification information, and generate the authentication information;
the sending module 802 is further configured to send the authentication information and a vehicle registration service interface to the server corresponding to the vehicle, so that the server corresponding to the vehicle sends the authentication information and the vehicle registration service interface to the vehicle.

In an embodiment, the verification information corresponding to the server corresponding to the vehicle includes the second download address of the second sub-verification information and the second root verification information.

In an embodiment, the verification information corresponding to the server corresponding to the vehicle includes sub-verification information corresponding to the server corresponding to the vehicle;
the processing module includes:
a generating unit, configured to generate the second sub-verification information and the second root verification information according to the sub-verification information corresponding to the server corresponding to the vehicle and sub-verification information corresponding to other servers corresponding to other vehicles;
a processing unit, configured to add the second download address of the second sub-verification information and the second root verification information into the access verification information.

The vehicle communication apparatus provided by the embodiment of the present disclosure can be used to execute the vehicle communication method in the method embodiments, and the realization principle and the technical effect thereof are similar, which will not be repeated herein.

FIG. 9 is a structural schematic diagram of a vehicle communication apparatus provided by an embodiment of the present disclosure. As shown in FIG. 9, the vehicle communication apparatus 900 includes:
an acquiring module 901, configured to acquire authentication information and a vehicle registration service interface from a server corresponding to a first area;
a sending module 902, configured to send the authentication information and the vehicle registration service interface to the vehicle;
where the vehicle registration service interface is used to send a vehicle registration request to the server corresponding to the first area, to obtain a download address of access verification information; the authentication information is used to authenticate the vehicle registration request, and the access verification information includes a first download address of first sub-verification information and first root verification information corresponding to the first area, and a second download address of second sub-verification information and second root verification information corresponding to the vehicle.

In an embodiment, the acquiring module 901 includes:
a sending unit, configured to send a mutual trust registration request to the server corresponding to the first area, where the mutual trust registration request includes verification information corresponding to a server corresponding to the vehicle;
a receiving unit, configured to receive the authentication information and the vehicle registration service interface sent by the server corresponding to the first area.

In an embodiment, the verification information corresponding to the server corresponding to the vehicle includes the second download address of the second sub-verification information and the second root verification information.

In an embodiment, the verification information corresponding to the server corresponding to the vehicle includes sub-verification information corresponding to the server corresponding to the vehicle.

The vehicle communication apparatus provided by the embodiment of the present disclosure can be used to execute the vehicle communication method in the method embodiments, and the realization principle and the technical effect thereof are similar, which will not be repeated herein.

According to the embodiment of the present disclosure, the present disclosure further provides an electronic device and a non-transitory computer readable storage medium storing a computer instruction.

According to the embodiment of the present disclosure, the present disclosure further provides a computer program product, where the program product includes: a computer program stored in a readable storage medium, and at least one processor of an electronic device can read the computer program from the readable storage medium, and the at least one processor executes the computer program to cause the electronic device to execute the method provided by any one of the above embodiments.

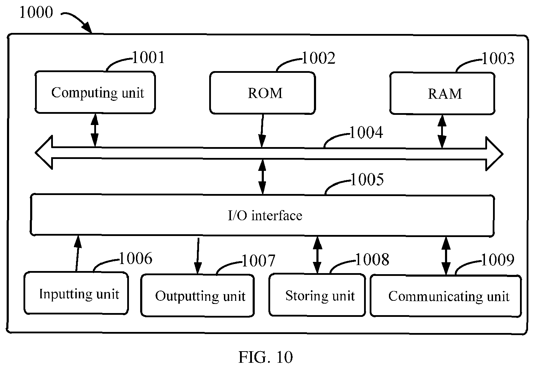

FIG. 10 is a schematic block diagram of an electronic device used to realize the vehicle communication method of the embodiments of the present disclosure. The electronic device intends to represent digital computers of various forms, for example, laptop computers, desktop computers, workstations, personal digital assistants, servers, blade servers, mainframe computers and other suitable computers. The electronic device can also represent mobile apparatuses of various forms, for example, personal digital assistance, cellular phone, smart phones, wearable devices and other similar computing apparatuses. The components, their connections and relationships, and their functions shown herein are only examples, and are not intended to limit the implementation of the present disclosure described and/or claimed herein. The electronic device can be servers of the vehicle, the V2X device, the mutual trust platform or the external certificate system in the above embodiments.

As shown in FIG. 10, the electronic device 1000 includes a computing unit 1001, which can execute various appropriate actions and processing according to a computer program stored in a read-only memory (ROM) 1002 or a computer program loaded from a storage unit 1008 to a random access memory (RAM) 1003. The RAM 1003 may further store various programs and data needed for the electronic device 1000 to operate. The computing unit 1001, the ROM 1002 and the RAM 1003 are connected to each other through a bus 1004. An input/output (I/O) interface 1005 is also connected to the bus 1004.

A plurality of components in the electronic device 1000 are connected to the I/O interface 1005, including: an input unit 1006, such as a keyboard, a mouse, etc.; an output unit 1007, such as various types of displays, speakers, etc.; a storage unit 1008, such as a magnetic disk, an optical disk, etc.; and a communicating unit 1009, such as a network card, a modem, a wireless communication transceiver, etc. The communicating unit 1009 allows the electronic device 1000 to exchange information/data with other devices through a computer network such as the Internet and/or various telecommunication networks.

The computing unit 1001 may be various universal and/or specific processing components having ability of processing and computing. Some examples of the computing unit 1001 include, but are not limited to, central processing units (CPU), graphic processing units (GPU), various specific artificial intelligent (AI) computing chips, various computing units running machine learning module algorithms, digital signal processors (DSP), and any appropriate processors, controllers and micro-controllers, etc. The computing unit 1001 executes respective methods and processing described above, for example, the vehicle communication method. For example, in some embodiments, the vehicle communication method can be realized as a computer software program, which is tangibly contained in a machine-readable medium such as the storage unit 1008. In some embodiments, part or all of a computer program can be loaded and/or installed on the electronic device 1000 through the ROM 1002 and/or the communicating unit 1009. When the computer program is loaded on the RAM 1003 and is executed by the computing unit 1001, one or more steps of the vehicle communication method described above can be executed. Alternatively, in other embodiments, the computing unit 1001 can be configured to execute the vehicle communication method through any other appropriate manners (for example, by means of firmware).

Various embodiments of the systems and technologies described above herein can be implemented in digital electronic circuit system, integrated circuit system, field programmable gate array (FPGA), application specific integrated circuit (ASIC), application specific standard product (ASSP), system on chip (SOC), load programmable logic device (CPLD), computer hardware, firmware, software, and/or the combination thereof. These various embodiments may include: being implemented in one or more computer programs, the one or more computer programs can be executed and/or interpreted on a programmable system including at least one programmable processor, which can be a specific or universal programmable processor that can receive data and instructions from a storage system, at least one input apparatus, and at least one output apparatus and transmit the data and instructions to the storage system, the at least one input apparatus, and the at least one output apparatus.

The program code for implementing the method of the present disclosure can be written in any combination of one or more programming languages. These program codes can be provided to a processor or controller of a universal computer, a specific computer or other programmable data processing apparatuses, so that the program codes, when executed by the processor or controller, cause the functions/operations specified in the flowchart and/or block diagrams to be implemented. The program codes can be completely executed on the machine, partially executed on the machine, partially executed on the machine as an independent software package and partially executed on the remote machine or completely executed on the remote machine or server.

In the context of the present disclosure, the machine-readable medium can be a tangible medium that can contain or store a program for use by an execution system, an apparatus or a device or for use in connection with the execution system, the apparatus or the device. The machine-readable medium can be a machine-readable signal medium or a machine-readable storage medium. The machine-readable medium may include, but is not limited to, electronic, magnetic, optical, electromagnetic, infrared, or semiconductor systems, apparatuses or devices, or any suitable combination thereof. More specific examples of the machine-readable storage medium may include electrical connection based on one or more wires, portable computer disk, hard disk, random access memory (RAM), read-only memory (ROM), erasable programmable read-only memory (EPROM or flash memory), optical fiber, portable compact disk read-only memory (CD-ROM), optical storage device, magnetic storage device, or any suitable combination thereof.

To provide interaction with users, the systems and technologies described herein can be implemented on a computer with a display device (for example, CRT (cathode ray tube) or LCD (liquid crystal display) monitor) for displaying information to users; and a keyboard and pointing device (for example, a mouse or a trackball) through which a user can provide input to the computer. Other kinds of apparatuses can also be used to provide interaction with users; for example, the feedback provided to the user can be any form of sensory feedbacks (for example, visual feedback, auditory feedback, or tactile feedback); and can receive the input from the user in any form (including acoustic input, voice input or tactile input).

The systems and technologies described herein can be implemented in a computing system including a back-end component (e.g., as a data server), or a computing system including a middleware component (e.g., an application server), or a computing system including a front-end component (e.g., a user computer with a graphical user interface or a web browser through which users can interact with the embodiments of the systems and technologies described herein), or computing system including any combination of such back-end components, middleware components, or front-end components. The components of the system can be connected to each other by any form or medium of digital data communication (for example, communication network). Examples of communication networks include local area network (LAN), wide area network (WAN) and the Internet.

The computer system may include a client and a server. The client and the server are generally far away from each other and usually interact through a communication network. The relationship between the client and the server is generated by running computer programs having a client-server relationship with each other on corresponding computers. The server can be a cloud server, also known as cloud computing server or cloud host, which is a host product in the cloud computing service system and solves the defects of the traditional physical host and VPS service ("Virtual Private Server", or "VPS" for short), which are difficult to manage and weak in business scalability. The server can also be a distributed system server or a server combined with block chain.

It should be understood that various forms of processes shown above can be used to reorder, add or delete steps. For example, the various steps described in the present disclosure can be executed in parallel, sequentially or in a different order, so long as the desired results of the technical solution disclosed in the present disclosure can be achieved, which is not limited herein.

The above specific embodiments do not limit the scope of protection of the present disclosure. Those skilled in the art should understand that various modifications, combinations, subcombinations and substitutions can be made according to the design requirements and other factors.

## Claims

1. A vehicle communication method, applied in a vehicle, comprising:
acquiring (S201) first root verification information and a first download address corresponding to a first area, and second root verification information and a second download address corresponding to the vehicle from a server corresponding to the first area, wherein the server corresponding to the first area is used to manage certificates of a local certificate system of the first area and an external certificate system, the first root verification information corresponding to the first area is a root certificate of the local certificate system, and the second root verification information corresponding to the vehicle is a root certificate of the external certificate system to which the vehicle belongs;
downloading (S202) first sub-verification information corresponding to the first area according to the first download address, wherein the first root verification information is used to verify correctness of the first sub-verification information, and the first sub-verification information corresponding to the first area is a trusted domain certificate list of the local certificate system;
downloading (S202) second sub-verification information corresponding to the vehicle according to the second download address, wherein the second root verification information is used to verify correctness of the second sub-verification information, and the second sub-verification information corresponding to the vehicle is a trusted domain certificate list of the external certificate system to which the vehicle belongs; and
communicating (S203) with a communication device within the first area according to the first root verification information, the first sub-verification information, the second root verification information and the second sub-verification information;
wherein the communicating with a communication device within the first area according to the first root verification information, the first sub-verification information, the second root verification information and the second sub-verification information comprises:
importing the first root verification information, the first sub-verification information, the second root verification information and the second sub-verification information into trust verification information of the vehicle; and
communicating with the communication device within the first area according to the trust verification information.

2. The method according to claim 1, wherein the acquiring (S201) first root verification information and a first download address corresponding to a first area, and second root verification information and a second download address corresponding to the vehicle from a server corresponding to the first area comprises:
acquiring access verification information from the server corresponding to the first area, wherein the access verification information comprises the first root verification information and the first download address corresponding to the first area, and the second root verification information and the second download address corresponding to the vehicle.

3. The method according to claim 2, wherein the acquiring access verification information from the server corresponding to the first area comprises:
sending a download request to the server corresponding to the first area according to a download address of the access verification information, wherein the download request comprises authentication information of the vehicle, and the authentication information is used to authenticate the download request; and
receiving the access verification information sent by the server corresponding to the first area.

4. The method according to claim 3, further comprising:
sending a vehicle registration request to the server corresponding to the first area, wherein the vehicle registration request comprises the authentication information of the vehicle, and the authentication information is used to authenticate the vehicle registration request; and
receiving the download address of the access verification information sent by the server corresponding to the first area.

5. The method according to claim 4, wherein the sending a vehicle registration request to the server corresponding to the first area comprises:
receiving the authentication information and a vehicle registration service interface sent by a server corresponding to the vehicle, wherein the authentication information and the vehicle registration service interface are acquired in advance by the server corresponding to the vehicle from the server corresponding to the first area; and
sending the vehicle registration request to the server corresponding to the first area according to the vehicle registration service interface.

6. A vehicle communication method, applied in a server corresponding to a first area, wherein the server corresponding to the first area is used to manage certificates of a local certificate system of the first area and an external certificate system; wherein the method comprises:
receiving (S301) a download request sent by the vehicle, wherein the download request is used to request to download access verification information, the download request comprises authentication information of the vehicle, and the access verification information comprises a first download address of first sub-verification information and first root verification information corresponding to the first area, and a second download address of second sub-verification information and second root verification information corresponding to the vehicle, the first sub-verification information corresponding to the first area is a trusted domain certificate list of the local certificate system, the first root verification information corresponding to the first area is a root certificate of the local certificate system, the second sub-verification information corresponding to the vehicle is a trusted domain certificate list of the external certificate system to which the vehicle belongs, and the second root verification information corresponding to the vehicle is a root certificate of the external certificate system to which the vehicle belongs; and
authenticating (S302) the download request according to the authentication information, and sending the access verification information to the vehicle after authentication is passed.

7. The method according to claim 6, further comprising:
receiving a vehicle registration request sent by the vehicle, wherein the vehicle registration request comprises the authentication information; and
authenticating the vehicle registration request according to the authentication information, and sending a download address of the access verification information to the vehicle after authentication is passed.

8. The method according to claim 7, further comprising:
receiving a mutual trust registration request sent by a server corresponding to the vehicle, wherein the mutual trust registration request comprises verification information corresponding to the server corresponding to the vehicle;
adding the verification information corresponding to the server corresponding to the vehicle into the access verification information, and generating the authentication information; and
sending the authentication information and a vehicle registration service interface to the server corresponding to the vehicle, so that the server corresponding to the vehicle sends the authentication information and the vehicle registration service interface to the vehicle;
wherein the verification information corresponding to the server corresponding to the vehicle comprises the second download address of the second sub-verification information and the second root verification information.

9. The method according to claim 8, wherein the verification information corresponding to the server corresponding to the vehicle comprises sub-verification information corresponding to the server corresponding to the vehicle;
the adding the verification information corresponding to the server corresponding to the vehicle into the access verification information comprises:
generating the second sub-verification information and the second root verification information according to the sub-verification information corresponding to the server corresponding to the vehicle and sub-verification information corresponding to other servers corresponding to other vehicles; and
adding the second download address of the second sub-verification information and the second root verification information into the access verification information.

10. A vehicle communication method, applied in a server corresponding to a vehicle, comprising:
acquiring (S401) authentication information and a vehicle registration service interface from a server corresponding to a first area, wherein the server corresponding to the first area is used to manage certificates of a local certificate system of the first area and an external certificate system; and
sending (S402) the authentication information and the vehicle registration service interface to the vehicle;
wherein the vehicle registration service interface is used to send a vehicle registration request to the server corresponding to the first area, to obtain a download address of access verification information; the authentication information is used to authenticate the vehicle registration request, and the access verification information comprises a first download address of first sub-verification information and first root verification information corresponding to the first area, and a second download address of second sub-verification information and second root verification information corresponding to the vehicle, the first sub-verification information corresponding to the first area is a trusted domain certificate list of the local certificate system, the first root verification information corresponding to the first area is a root certificate of the local certificate system, the second sub-verification information corresponding to the vehicle is a trusted domain certificate list of the external certificate system to which the vehicle belongs, and the second root verification information corresponding to the vehicle is a root certificate of the external certificate system to which the vehicle belongs.

11. The method according to claim 10, wherein the acquiring (S401) authentication information and a vehicle registration service interface from a server corresponding to a first area comprises:
sending a mutual trust registration request to the server corresponding to the first area, wherein the mutual trust registration request comprises verification information corresponding to the server corresponding to the vehicle; and
receiving the authentication information and the vehicle registration service interface sent by the server corresponding to the first area;
wherein the verification information corresponding to the server corresponding to the vehicle comprises the second download address of the second sub-verification information and the second root verification information.

12. An electronic device, comprising:
at least one processor; and a memory communicatively connected to the at least one processor;
wherein the memory stores an instruction executable by the at least one processor, and the instruction is executed by the at least one processor to cause the at least one processor to execute the method according to any one of claims 1-5; or to cause the at least one processor to execute the method according to any one of claims 6-9; or to cause the at least one processor to execute the method according to any one of claims 10 or 11.

13. A non-transitory computer readable storage medium storing a computer instruction, the computer instruction is used to cause a computer to execute the method according to any one of claims 1-5; or to execute the method according to any one of claim 6-9; or to execute the method according to any one of claims 10 or 11.

14. A computer program product, comprising a computer program, wherein the computer program implements, when executed by a processor, the method according to any one of claims 1-5; or implements the method according to any one of claims 6-9; or implements the method according to any one of claims 10 or 11.

## Patentansprüche

1. Fahrzeugkommunikationsverfahren, das in einem Fahrzeug angewendet wird, umfassend:
Erfassen (S201) von ersten Stammprüfungsinformationen und einer ersten Download-Adresse, die einem ersten Bereich entsprechen, und zweiten Stammprüfungsinformationen und einer zweiten Download-Adresse, die dem Fahrzeug entsprechen, von einem Server, der dem ersten Bereich entspricht, wobei der dem ersten Bereich entsprechende Server zur Verwaltung von Zertifikaten eines lokalen Zertifikatssystems des ersten Bereichs und eines externen Zertifikatssystems verwendet wird, wobei die dem ersten Bereich entsprechenden ersten Stammprüfungsinformationen ein Stammzertifikat des lokalen Zertifikatssystems sind und die dem Fahrzeug entsprechenden zweiten Stammprüfungsinformationen ein Stammzertifikat des externen Zertifikatssystems sind, zu dem das Fahrzeug gehört;
Herunterladen (S202) von ersten Teilprüfungsinformationen, die dem ersten Bereich entsprechen, gemäß der ersten Download-Adresse, wobei die ersten Stammprüfungsinformationen verwendet werden, um die Richtigkeit der ersten Teilprüfungsinformationen zu überprüfen, und die ersten Teilprüfungsinformationen, die dem ersten Bereich entsprechen, eine Liste von vertrauenswürdigen Domänenzertifikaten des lokalen Zertifikatssystems sind;
Herunterladen (S202) von zweiten Teilprüfungsinformationen, die dem Fahrzeug entsprechen, gemäß der zweiten Download-Adresse, wobei die zweiten Stammprüfungsinformationen verwendet werden, um die Korrektheit der zweiten Teilprüfungsinformationen zu überprüfen, und die zweiten Teilprüfungsinformationen, die dem Fahrzeug entsprechen, eine vertrauenswürdige Domänenzertifikatsliste des externen Zertifikatssystems sind, zu dem das Fahrzeug gehört; und
Kommunizieren (S203) mit einer Kommunikationsvorrichtung innerhalb des ersten Bereichs gemäß den ersten Stammprüfungsinformationen, den ersten Teilprüfungsinformationen, den zweiten Stammprüfungsinformationen und den zweiten Teilprüfungsinformationen;
wobei die Kommunikation mit einer Kommunikationsvorrichtung innerhalb des ersten Bereichs gemäß den ersten Stammprüfungsinformationen, den ersten Teilprüfungsinformationen, den zweiten Stammprüfungsinformationen und den zweiten Teilprüfungsinformationen Folgendes umfasst:
Importieren der ersten Stammprüfungsinformationen, der ersten Teilprüfungsinformationen, der zweiten Stammprüfungsinformationen und der zweiten Teilprüfungsinformationen in die Vertrauensprüfungsinformationen des Fahrzeugs; und
Kommunikation mit der Kommunikationsvorrichtung innerhalb des ersten Bereichs entsprechend der Vertrauensprüfungsinformationen.

2. Verfahren nach Anspruch 1, wobei das Erfassen (S201) von ersten Stammprüfungsinformationen und einer ersten Download-Adresse, die einem ersten Bereich entsprechen, und von zweiten Stammprüfungsinformationen und einer zweiten Download-Adresse, die dem Fahrzeug entsprechen, von einem Server, der dem ersten Bereich entspricht, Folgendes umfasst:
Erfassen von Zugangsprüfungsinformationen von dem Server, der dem ersten Bereich entspricht, wobei die Zugangsprüfungsinformationen die ersten Stammprüfungsinformationen und die erste Download-Adresse, die dem ersten Bereich entspricht, und die zweiten Stammprüfungsinformationen und die zweite Download-Adresse, die dem Fahrzeug entspricht, umfassen.

3. Verfahren nach Anspruch 2, wobei das Erfassen von Zugangsprüfungsinformationen von dem Server, der dem ersten Bereich entspricht, umfasst:
Senden einer Download-Anforderung an den Server, die dem ersten Bereich entspricht, gemäß einer Download-Adresse der Zugangsprüfungsinformationen, wobei die Download-Anforderung Authentifizierungsinformationen des Fahrzeugs umfasst und die Authentifizierungsinformationen zur Authentifizierung der Download-Anforderung verwendet werden; und
Empfang der vom Server gesendeten Zugangsprüfungsinformationen, die dem ersten Bereich entsprechen.

4. Verfahren nach Anspruch 3, weiter umfassend:
Senden einer Fahrzeugregistrierungsanfrage an den Server, der dem ersten Bereich entspricht, wobei die Fahrzeugregistrierungsanfrage die Authentifizierungsinformationen des Fahrzeugs umfasst und die Authentifizierungsinformationen verwendet werden, um die Fahrzeugregistrierungsanfrage zu authentifizieren; und
Empfang der Download-Adresse der vom Server gesendeten Zugangsprüfungsinformationen, die dem ersten Bereich entsprechen.

5. Verfahren nach Anspruch 4, wobei das Senden einer Fahrzeugregistrierungsanfrage an den Server, der dem ersten Bereich entspricht, umfasst:
Empfangen der Authentifizierungsinformationen und einer Schnittstelle des Fahrzeugregistrierungsdienstes, die von einem dem Fahrzeug entsprechenden Server gesendet werden, wobei die Authentifizierungsinformationen und die Schnittstelle des Fahrzeugregistrierungsdienstes im Voraus von dem dem Fahrzeug entsprechenden Server von dem dem ersten Bereich entsprechenden Server erfasst werden; und
Senden der Fahrzeugregistrierungsanfrage an den Server, der dem ersten Bereich entspricht, gemäß der Schnittstelle des Fahrzeugregistrierungsdienstes.

6. Fahrzeugkommunikationsverfahren, das in einem Server angewendet wird, der einem ersten Bereich entspricht, wobei der dem ersten Bereich entsprechende Server verwendet wird, um Zertifikate eines lokalen Zertifikatssystems des ersten Bereichs und eines externen Zertifikatssystems zu verwalten; wobei das Verfahren umfasst:
Empfangen (S301) einer von dem Fahrzeug gesendeten Download-Anforderung, wobei die Download-Anforderung verwendet wird, um das Herunterladen von Zugangsprüfungsinformationen anzufordern, die Download-Anforderung Authentifizierungsinformationen des Fahrzeugs umfasst, und die Zugangsprüfungsinformationen eine erste Download-Adresse von ersten Teilprüfungsinformationen und ersten Stammprüfungsinformationen, die dem ersten Bereich entsprechen, und eine zweite Download-Adresse von zweiten Teilprüfungsinformationen und zweiten Stammprüfungsinformationen, die dem Fahrzeug entsprechen, umfassen, wobei die ersten Teilprüfungsinformationen, die dem ersten Bereich entsprechen, eine Trusted-Domain-Zertifikatsliste des lokalen Zertifikatssystems sind, die ersten Stammprüfungsinformationen, die dem ersten Bereich entsprechen, ein Stammzertifikat des lokalen Zertifikatssystems sind, die zweiten Teilprüfungsinformationen, die dem Fahrzeug entsprechen, eine Trusted-Domain-Zertifikatsliste des externen Zertifikatssystems sind, zu dem das Fahrzeug gehört, und die zweiten Stammprüfungsinformationen, die dem Fahrzeug entsprechen, ein Stammzertifikat des externen Zertifikatssystems sind, zu dem das Fahrzeug gehört; und
Authentifizierung (S302) der Download-Anforderung anhand der Authentifizierungsinformationen und Senden der Zugangsprüfungsinformationen an das Fahrzeug, nachdem die Authentifizierung bestanden wurde.

7. Verfahren nach Anspruch 6, weiter umfassend:
Empfangen einer von dem Fahrzeug gesendeten Fahrzeugregistrierungsanfrage, wobei die Fahrzeugregistrierungsanfrage die Authentifizierungsinformationen umfasst; und
Authentifizierung der Fahrzeugregistrierungsanfrage anhand der Authentifizierungsinformationen und Senden einer Download-Adresse der Zugangsprüfungsinformationen an das Fahrzeug, nachdem die Authentifizierung bestanden wurde.

8. Verfahren nach Anspruch 7, weiter umfassend:
Empfangen einer Registrierungsanfrage für gegenseitiges Vertrauen, die von einem dem Fahrzeug entsprechenden Server gesendet wurde, wobei die Registrierungsanfrage für gegenseitiges Vertrauen Prüfungsinformationen umfasst, die dem dem Fahrzeug entsprechenden Server entsprechen;
Hinzufügen der Prüfungsinformationen, die dem dem Fahrzeug entsprechenden Server entsprechen, zu den Zugangsprüfungsinformationen und Erzeugen der Authentifizierungsinformationen; und
Senden der Authentifizierungsinformationen und einer Schnittstelle des Fahrzeugregistrierungsdienstes an den dem Fahrzeug entsprechenden Server, sodass der dem Fahrzeug entsprechende Server die Authentifizierungsinformationen und die Schnittstelle des Fahrzeugregistrierungsdienstes an das Fahrzeug sendet;
wobei die Prüfungsinformationen, die dem dem Fahrzeug entsprechenden Server entsprechen, die zweite Download-Adresse der zweiten Teilprüfungsinformationen und die zweiten Stammprüfungsinformationen umfassen.

9. Verfahren nach Anspruch 8, wobei die Prüfungsinformationen, die dem dem Fahrzeug entsprechenden Server entsprechen, Teilprüfungsinformationen umfassen, die dem dem Fahrzeug entsprechenden Server entsprechen;
wobei das Hinzufügen der Überprüfungsinformationen, die dem dem Fahrzeug entsprechenden Server entsprechen, zu den Zugangsprüfungsinformationen Folgendes umfasst:
Erzeugen der zweiten Teilprüfungsinformation und der zweiten Stammprüfungsinformationen gemäß der Teilprüfungsinformationen, die dem dem Fahrzeug entsprechenden Server entsprechen, und der Teilprüfungsinformationen, die anderen dem Fahrzeug entsprechenden Servern entsprechen; und
Hinzufügen der zweiten Download-Adresse der zweiten Teilprüfungsinformationen und der zweiten Stammprüfungsinformationen zu den Zugangsprüfungsinformationen.

10. Fahrzeugkommunikationsverfahren, angewandt in einem Server, der einem Fahrzeug entspricht, umfassend:
Erfassen (S401) von Authentifizierungsinformationen und einer Schnittstelle des Fahrzeugregistrierungsdienstes von einem Server, der einem ersten Bereich entspricht, wobei der Server, der dem ersten Bereich entspricht, verwendet wird, um Zertifikate eines lokalen Zertifikatssystems des ersten Bereichs und eines externen Zertifikatssystems zu verwalten; und
Senden (S402) der Authentifizierungsinformationen und der Schnittstelle des Fahrzeugregistrierungsdienstes an das Fahrzeug;
wobei die Schnittstelle des Fahrzeugregistrierungsdienstes verwendet wird, um eine Fahrzeugregistrierungsanfrage an den Server zu senden, der dem ersten Bereich entspricht, um eine Download-Adresse von Zugangsprüfungsinformationen zu erhalten; die Authentifizierungsinformationen verwendet werden, um die Fahrzeugregistrierungsanfrage zu authentifizieren, und die Zugangsprüfungsinformationen eine erste Download-Adresse von ersten Teilprüfungsinformationen und ersten Stammprüfungsinformationen umfassen, die dem ersten Bereich entsprechen, und eine zweite Download-Adresse von zweiten Teilprüfungsinformationen und zweiten Stammprüfungsinformationen, die dem Fahrzeug entsprechen, umfassen, wobei die ersten Teilprüfungsinformationen, die dem ersten Bereich entsprechen, eine Trusted-Domain-Zertifikatsliste des lokalen Zertifikatssystems sind, die ersten Stammprüfungsinformationen, die dem ersten Bereich entsprechen, ein Stammzertifikat des lokalen Zertifikatssystems sind, die zweiten Teilprüfungsinformationen, die dem Fahrzeug entsprechen, eine Trusted-Domain-Zertifikatsliste des externen Zertifikatssystems sind, zu dem das Fahrzeug gehört, und die zweiten Stammprüfungsinformationen, die dem Fahrzeug entsprechen, ein Stammzertifikat des externen Zertifikatssystems sind, zu dem das Fahrzeug gehört.

11. Verfahren nach Anspruch 10, wobei das Erfassen (S401) von Authentifizierungsinformationen und einer Schnittstelle des Fahrzeugregistrierungsdienstes von einem Server, der einem ersten Bereich entspricht, Folgendes umfasst:
Senden einer Registrierungsanforderung für gegenseitiges Vertrauen an den Server, der dem ersten Bereich entspricht, wobei die Registrierungsanforderung für gegenseitiges Vertrauen Prüfungsinformationen umfasst, die dem dem Fahrzeug entsprechenden Server entsprechen; und
Empfangen der Authentifizierungsinformationen und der Schnittstelle des Fahrzeugregistrierungsdienstes, die von dem Server gesendet wurden, der dem ersten Bereich entspricht;
wobei die Prüfungsinformationen, die dem dem Fahrzeug entsprechenden Server entsprechen, die zweite Download-Adresse der zweiten Teilprüfungsinformationen und die zweiten Stammprüfungsinformationen umfassen.

12. Elektronische Vorrichtung, umfassend:
mindestens einen Prozessor; und einen Speicher, der mit dem mindestens einen Prozessor kommunikativ verbunden ist;
wobei der Speicher eine Anweisung speichert, die von dem mindestens einen Prozessor ausführbar ist, und die Anweisung von dem mindestens einen Prozessor ausgeführt wird, um den mindestens einen Prozessor zu veranlassen, das Verfahren nach einem der Ansprüche 1-5 auszuführen; oder um den mindestens einen Prozessor zu veranlassen, das Verfahren nach einem der Ansprüche 6-9 auszuführen; oder um den mindestens einen Prozessor zu veranlassen, das Verfahren nach einem der Ansprüche 10 oder 11 auszuführen.

13. Nichtflüchtiges, computerlesbares Speichermedium, das eine Computeranweisung speichert, wobei die Computeranweisung verwendet wird, um einen Computer zu veranlassen, das Verfahren nach einem der Ansprüche 1-5 auszuführen; oder das Verfahren nach einem der Ansprüche 6-9 auszuführen; oder das Verfahren nach einem der Ansprüche 10 oder 11 auszuführen.

14. Computerprogrammprodukt, umfassend ein Computerprogramm, wobei das Computerprogramm, wenn es von einem Prozessor ausgeführt wird, das Verfahren nach einem der Ansprüche 1-5 implementiert; oder das Verfahren nach einem der Ansprüche 6-9 implementiert; oder das Verfahren nach einem der Ansprüche 10 oder 11 implementiert.

## Revendications

1. Procédé de communication de véhicule, appliqué dans un véhicule, comprenant :
l'acquisition (S201) d'une première information de vérification de racine et d'une première adresse de téléchargement correspondant à une première zone, et d'une seconde information de vérification de racine et d'une seconde adresse de téléchargement correspondant au véhicule depuis un serveur correspondant à la première zone, dans lequel le serveur correspondant à la première zone est utilisé pour gérer des certificats d'un système de certificat local de la première zone et d'un système de certificat externe, la première information de vérification de racine correspondant à la première zone est un certificat de racine du système de certificat local, et la seconde information de vérification de racine correspondant au véhicule est un certificat de racine du système de certificat externe auquel le véhicule appartient ;
le téléchargement (S202) d'une première information de sous-vérification correspondant à la première zone en fonction de la première adresse de téléchargement, dans lequel la première information de vérification de racine est utilisée pour vérifier l'exactitude de la première information de sous-vérification, et la première information de sous-vérification correspondant à la première zone est une liste de certificats de domaine de confiance du système de certificat local ;
le téléchargement (S202) d'une seconde information de sous-vérification correspondant au véhicule en fonction de la seconde adresse de téléchargement, dans lequel la seconde information de vérification de racine est utilisée pour vérifier l'exactitude de la seconde information de sous-vérification, et la seconde information de sous-vérification correspondant au véhicule est une liste de certificats de domaine de confiance du système de certificat externe auquel le véhicule appartient ; et
la communication (S203) avec un dispositif de communication à l'intérieur de la première zone en fonction de la première information de vérification de racine, la première information de sous-vérification, la seconde information de vérification de racine et la seconde information de sous-vérification ;
dans lequel la communication avec un dispositif de communication à l'intérieur de la première zone en fonction de la première information de vérification de racine, la première information de sous-vérification, la seconde information de vérification de racine et la seconde information de sous-vérification comprend :
l'importation de la première information de vérification de racine, la première information de sous-vérification, la seconde information de vérification de racine et la seconde information de sous-vérification dans des informations de vérification de confiance du véhicule ; et
la communication avec le dispositif de communication à l'intérieur de la première zone en fonction des informations de vérification de confiance.

2. Procédé selon la revendication 1, dans lequel l'acquisition (S201) d'une première information de vérification de racine et d'une première adresse de téléchargement correspondant à une première zone, et d'une seconde information de vérification de racine et d'une seconde adresse de téléchargement correspondant au véhicule depuis un serveur correspondant à la première zone comprend :
l'acquisition d'informations de vérification d'accès depuis le serveur correspondant à la première zone, dans lequel les informations de vérification d'accès comprennent la première information de vérification de racine et la première adresse de téléchargement correspondant à une première zone, et la seconde information de vérification de racine et la seconde adresse de téléchargement correspondant au véhicule.

3. Procédé selon la revendication 2, dans lequel l'acquisition des informations de vérification d'accès depuis le serveur correspondant à la première zone comprend :
l'envoi d'une demande de téléchargement au serveur correspondant à la première zone en fonction d'une adresse de téléchargement des informations de vérification d'accès, dans lequel la demande de téléchargement comprend des informations d'authentification du véhicule, et les informations d'authentification sont utilisées pour authentifier la demande de téléchargement ; et
la réception des informations de vérification d'accès envoyées par le serveur correspondant à la première zone.

4. Procédé selon la revendication 3, comprenant en outre :
l'envoi d'une demande d'enregistrement de véhicule au serveur correspondant à la première zone, dans lequel la demande d'enregistrement de véhicule comprend les informations d'authentification du véhicule, et les informations d'authentification sont utilisées pour identifier la demande d'enregistrement de véhicule ; et
la réception de l'adresse de téléchargement des informations de vérification d'accès envoyées par le serveur correspondant à la première zone.

5. Procédé selon la revendication 4, dans lequel l'envoi d'une demande d'enregistrement de véhicule au serveur correspondant à la première zone comprend :
la réception des informations d'authentification et d'une interface de service d'enregistrement de véhicule envoyées par un serveur correspondant au véhicule, dans lequel les informations d'authentification et l'interface de service d'enregistrement de véhicule sont acquises à l'avance par le serveur correspondant au véhicule depuis le serveur correspondant à la première zone ; et
l'envoi de la demande d'enregistrement de véhicule au serveur correspondant à la première zone en fonction de l'interface de service d'enregistrement de véhicule.

6. Procédé de communication de véhicule, appliqué dans un serveur correspondant à une première zone, dans lequel le serveur correspondant à la première zone est utilisé pour gérer des certificats d'un système de certificat local de la première zone et d'un système de certificat externe ; dans lequel le procédé comprend :
la réception (S301) d'une demande de téléchargement envoyée par le véhicule, dans lequel la demande de téléchargement est utilisée pour demander de télécharger des informations de vérification d'accès, la demande de téléchargement comprend des informations d'authentification du véhicule, et les informations de vérification d'accès comprennent une première adresse de téléchargement d'une première information de sous-vérification et d'une première information de vérification de racine correspondant à la première zone, et une seconde adresse de téléchargement d'une seconde information de sous-vérification et d'une seconde information de vérification de racine correspondant au véhicule, la première information de sous-vérification correspondant à la première zone est une liste de certificats de domaine de confiance du système de certificat local, la première information de vérification de racine correspondant à la première zone est un certificat de racine du système de certificat local, la seconde information de sous-vérification correspondant au véhicule est une liste de certificats de domaine de confiance du système de certificat externe auquel le véhicule appartient, et la seconde information de vérification de racine correspondant au véhicule est un certificat de racine du système de certificat externe auquel le véhicule appartient ; et
l'authentification (S302) de la demande de téléchargement en fonction des informations d'authentification, et l'envoi des informations de vérification d'accès au véhicule après la réussite de l'authentification.

7. Procédé selon la revendication 6, comprenant en outre :
la réception d'une demande d'enregistrement de véhicule envoyée par le véhicule, dans lequel la demande d'enregistrement de véhicule comprend les informations d'authentification ; et
l'authentification de la demande d'enregistrement de véhicule en fonction des informations d'authentification, et l'envoi d'une adresse de téléchargement des informations de vérification d'accès au véhicule après la réussite de l'authentification.

8. Procédé selon la revendication 7, comprenant en outre :
la réception d'une demande d'enregistrement de confiance mutuelle envoyée par un serveur correspondant au véhicule, dans lequel la demande d'enregistrement de confiance mutuelle comprend des informations de vérification correspondant au serveur correspondant au véhicule ;
l'ajout des informations de vérification correspondant au serveur correspondant au véhicule aux informations de vérification d'accès, et la génération des informations d'authentification ; et
l'envoi des informations d'authentification et d'une interface de service d'enregistrement de véhicule au serveur correspondant au véhicule, de sorte que le serveur correspondant au véhicule envoie les informations d'authentification et l'interface de service d'enregistrement de véhicule au véhicule ;
dans lequel les informations de vérification correspondant au serveur correspondant au véhicule comprennent la seconde adresse de téléchargement de la seconde information de sous-vérification et de la seconde information de vérification de racine.

9. Procédé selon la revendication 8, dans lequel les informations de vérification correspondant au serveur correspondant au véhicule comprennent des informations de sous-vérification correspondant au serveur correspondant au véhicule ;
l'ajout des informations de vérification correspondant au serveur correspondant au véhicule aux informations de vérification d'accès comprend :
la génération de la seconde information de sous-vérification et de la seconde information de vérification de racine en fonction des informations de sous-vérification correspondant au serveur correspondant au véhicule et d'informations de sous-vérification correspondant à d'autres serveurs correspondant à d'autres véhicules ; et
l'ajout de la seconde adresse de téléchargement de la seconde information de sous-vérification et de la seconde information de vérification de racine aux informations de vérification d'accès.

10. Procédé de communication de véhicule, appliqué dans un serveur correspondant à un véhicule, comprenant :
l'acquisition (S401) d'informations d'authentification et d'une interface de service d'enregistrement de véhicule depuis un serveur correspondant à une première zone, dans lequel le serveur correspondant à la première zone est utilisé pour gérer des certificats d'un système de certificat local de la première zone et d'un système de certificat externe ; et
l'envoi (S402) des informations d'authentification et de l'interface de service d'enregistrement de véhicule au véhicule ;
dans lequel l'interface de service d'enregistrement de véhicule est utilisée pour envoyer une demande d'enregistrement de véhicule au serveur correspondant à la première zone, pour obtenir une adresse de téléchargement d'informations de vérification d'accès ; les informations d'authentification sont utilisées pour authentifier la demande d'enregistrement de véhicule, et les informations de vérification d'accès comprennent une première adresse de téléchargement d'une première information de sous-vérification et d'une première information de vérification de racine correspondant à la première zone, et une seconde adresse de téléchargement d'une seconde information de sous-vérification et d'une seconde information de vérification de racine correspondant au véhicule, la première information de sous-vérification correspondant à la première zone est une liste de certificats de domaine de confiance du système de certificat local, la première information de vérification de racine correspondant à la première zone est un certificat de racine du système de certificat local, la seconde information de sous-vérification correspondant au véhicule est une liste de certificats de domaine de confiance du système de certificat externe auquel le véhicule appartient, et la seconde information de vérification de racine correspondant au véhicule est un certificat de racine du système de certificat externe auquel le véhicule appartient.

11. Procédé selon la revendication 10, dans lequel l'acquisition (S401) d'informations d'authentification et d'une interface de service d'enregistrement de véhicule depuis un serveur correspondant à une première zone comprend :
l'envoi d'une demande d'enregistrement de confiance mutuelle au serveur correspondant à la première zone, dans lequel la demande d'enregistrement de confiance mutuelle comprend des informations de vérification correspondant au serveur correspondant au véhicule ; et
la réception des informations d'authentification et de l'interface de service d'enregistrement de véhicule envoyées par le serveur correspondant à la première zone ;
dans lequel les informations de vérification correspondant au serveur correspondant au véhicule comprennent la seconde adresse de téléchargement de la seconde information de sous-vérification et de la seconde information de vérification de racine.

12. Dispositif électronique, comprenant :
au moins un processeur ; et une mémoire reliée en communication à l'au moins un processeur ;
dans lequel la mémoire stocke une instruction exécutable par le au moins un processeur, et l'instruction est exécutée par le au moins un processeur pour amener le au moins un processeur à exécuter le procédé selon l'une quelconque des revendications 1-5 ; ou pour amener le au moins un processeur à exécuter le procédé selon l'une quelconque des revendications 6-9 ; ou pour amener le au moins un processeur à exécuter le procédé selon l'une quelconque des revendications 10 et 11.

13. Support de stockage non transitoire lisible par ordinateur stockant une instruction d'ordinateur, l'instruction d'ordinateur est utilisée pour amener un ordinateur à exécuter le procédé selon l'une quelconque des revendications 1-5 ; ou à exécuter le procédé selon l'une quelconque des revendications 6-9 ; ou à exécuter le procédé selon l'une quelconque des revendications 10 et 11.

14. Produit programme informatique, comprenant un programme informatique, dans lequel le programme informatique met en oeuvre, lorsqu'il est exécuté par un processeur, le procédé selon l'une quelconque des revendications 1-5 ; ou met en oeuvre le procédé selon l'une quelconque des revendications 6-9 ; ou met en oeuvre le procédé selon l'une quelconque des revendications 10 et 11.
